# EUROPEAN PATENT SPECIFICATION

(11) **EP 3 504 949 B1**
(45) Date of publication and mention of the grant of the patent: **23.09.2020**
(21) Application number: 18209414.4
(22) Date of filing: 30.11.2018
(51) Int. Cl.: A01B 49/02, A01C 5/06, A01B 35/18, A01B 49/06

(54) **WORKING UNIT OF THE CULTIVATOR FOR POTATO RIDGES AND CULTIVATOR WITH THIS WORKING UNIT**
ARBEITSEINHEIT DES KULTIVATORS FÜR KARTOFFELRÜCKEN UND KULTIVATOR MIT DIESER ARBEITSEINHEIT
UNITÉ DE TRAVAIL DE CULTIVATEUR DE RANGÉES DE POMMES DE TERRE ET CULTIVATEUR DOTÉ DE CETTE UNITÉ DE TRAVAIL

(30) Priority: 29.12.2017 CZ 2017855
(43) Date of publication of application: 03.07.2019
(73) Proprietor: Vyzkumny ustav rostlinné vyroby, v.v.i., 16106 Praha 6 - Ruzyne Czech Republic (CZ); P & L, spol.s r.o., 76341 Biskupice Czech Republic (CZ)
(72) Inventor: Ruzek, Pavel, 25268 Stredokluky (CZ); Kusá, Helena, 27201 Kladno (CZ); Horký, Tomás, 59401 Ruda (CZ); Kopriva, Josef, 58827 Mezirícko (CZ)
(74) Representative: Sedlák, Jirí

(56) References cited:
- CN-B- 103 460 841
- DE-U1-202017 104 254
- JP-A- H10 215 705
- JP-B2- 2 599 724
- RU-C1- 2 614 379

## Description

### Field of the Invention

The present invention relates to the field of agriculture, namely the cultivation of the soil when planting potatoes in ridges.

### Background of the Invention

Mechanical cultivation of the potato ridges is used for the purpose of weeding and loosening the soil surface layer and moving the soil on the top of the ridge. The most widely used cultivation tools include tine harrows, shovel cultivators, shovel or disk and gathering working tools. But if potatoes are planted using the soil destoning technology, which is the majority method of growing potatoes in the Czech Republic, then after planting the tubers and creating the ridges, no cultivation is carried out. Protection against weeds is tackled by pre-emergent or post-emergent herbicides. Due to the application of herbicides to the soil surface usually before emergence of plants, the subsequent soil cultivation using the aforementioned tools is not recommended as these tools cause too much interference with the structure of the ridge.

Potatoes are planted with the use of different working units, which typically include forming tools, the so-called presser plates, which after the insertion of the tubers form the shape of the ridge while smoothing and compressing the surface layer of soil. Such working unit of the potato planter is described in the utility model CZ 30399 U1. This impairs the subsequent absorption of water from rainfalls in the ridge. After the first rains after planting potatoes, a crust with a thickness of 1 to 2 cam or more is often formed on the surface of the ridges, which significantly reduces absorption of rainwater in the soil. In fertilization with mineral fertilizers before planting or when planting tubers, nutrients from applied fertilizers are generally accepted by plants not earlier than after five weeks or longer. During this period, nutrients may be mobile in soil, e.g. nitrates, sulphates, etc., and flushed out of the reach of plant roots. Surface application of mineral fertilizers before emergence of the stand to the surface of the ridges is ineffective and only a small part of nutrients reaches the plant roots in the ridges. A suitable technology for local application of fertilizers to the already formed ridges is not available, which enables accurate placement of fertilizers without damaging the ridges. Deployment of such technology is complicated by the fact that when planting tubers with two-row planters in soil destoning technology, it is not always possible to comply with the precise spacing and parallelism of the individual ridges. The working unit of the inter-row cultivator according to the utility model CZ 27213 U1 is known, but it is only suitable for loosening the inter-row space, particularly when hoeing sugar beets.

The documents DE 20 2017 104254 U1, JP H10 215705 A, RU 2 614 379 C1, CN 103 460 841 B and JP 2 599724 B2 describe known working units of cultivators.

The objective of the invention is therefore to develop such a working unit of the cultivator for potato ridges, which eliminates the aforesaid drawbacks, in particular loosening gently the surface crust on the surface of ridges, while creating measures for retaining rainwater. Another objective of the invention is to develop a cultivator using this working unit, which allows the simultaneous cultivation of more than two rows and is also suitable for additional carrying of fertilizer applicators with exact application of fertilizers to the roots of plants without significant damage to the ridges.

### Summary of the Invention

The above mentioned drawbacks of known devices are eliminated by the working unit of the cultivator for potato ridges, comprising a support and an assembly of working tools for loosening and chiselling of ridges and for denting of non-rail furrow between adjacent ridges, according to the present invention. The summary of the working unit is that the assembly of working tools of the working unit comprises at least two co-axial loosening rollers for loosening the surface of adjacent ridges and one rotary denting wheel arranged between the loosening rollers on the same or parallel axis of rotation, which form the dents for retaining rainwater in non-rail furrow between the ridges. Each loosening roller is formed by an assembly of mutually angularly offset loosening stars attached to a common shaft, which is mounted in the fork in a pivoted manner. The denting wheel is mounted on the trailing arm. Each of the forks and the trailing arm are carried on separate pressing arms, which are pivotally mounted via pressure springs and suspensions in the footings anchored to the support. The central part of the support is further provided with the central pressure unit formed by a parallelogram with a central spring. The central pressure unit is used for setting the position and pressure of the whole working unit, the pressure springs are used for setting the pressure of each pressing arm. It is preferred when the central pressure unit and the pressing arms are also provided with the means for regulating the pressing force. Brackets are mounted on the edges of the support, in which travelling wheels are mounted and which carry the clamping device for the removable and adjustable mounting of loosening chisels at an angle for loosening the outer side of the ridge.

In the preferred embodiment, the brackets carry another clamping device for fixing liquid fertilizer applicators behind loosening chisels. The applicators are preferably mounted in a removable and adjustable manner in the clamping devices in a parallel position with the loosening chisels. The applicators are special application tools, which are connected to the distribution system, dosing device and liquid fertilizer tank. In another embodiment, the applicators may be, for example, directly integrated in loosening chisels.

In another preferred embodiment, the footings carrying pressing arms with the loosening rollers are provided with attachment lugs for positionable attachment of pressing arms to the support in order to adjust the distance of the end pressing arms from the central pressing arm according to the actual spacing of ridges. In contrast, the footing carrying the central pressing arm with the rotary denting wheel is preferably secured to the sleeve mounted on the support, where the central pressure unit is preferably attached to the sleeve on the other side of the support.

The working unit may be provided, for example, with a three-point linkage and operates as the single unit mounted on a tractor but with simultaneous cultivation of only two ridges.

The invention also includes a cultivator for potato ridges comprising three to five working units described above. The summary of the cultivator is that it comprises a main frame carrying at least three working units, with at least one central working unit mounted in a central region of the main frame and at least two end working units arranged along the sides of the central working unit. Each end working unit is mounted on the tilting arm fastened to the main frame with the possibility of rotary movement from vertical to horizontal position and vice versa and connected to the hydraulic drive for lifting and tilting. Important for the proper function of the end working units is that mounting of the end working units on the tilting arms is movable and that the cultivator is further provided with a guiding device for monitoring the line or spacing of ridges during travel of the cultivator and the associated regulating device for automatic feed regulation of the end working units in a horizontal direction depending on the change in line or spacing of ridges. The end working unit is in the working position during tilting of the tilting arms to the horizontal position and in the transport position during lifting of the tilting arms to the vertical position.

In the preferred embodiment of cultivator according to the invention, the end working units are arranged closer to the main frame opposite to the central working unit, to avoid collisions during the movement of the end working units. This is preferably achieved by that the auxiliary clamping frame extends from the main frame, to which the central pressure unit of the central working unit is fastened by means of attachment lugs. The auxiliary clamping frame can also serve as a base for carrying the liquid fertilizer tank.

In terms of structural rigidity and equipment life, it is preferred that the main frame consists of two parallel and mutually connected steel sections. Tilting arms are arranged oppositely therein, wherein one end is pivotally mounted inside the main frame between the sections. Part of the tilting arms is in the horizontal working position mounted also inside the main frame. The slides connected to the hydraulic feed drives are sliding-mounted on their parts in the horizontal position on both sides out of the main frame. The central pressure units of the end working units are preferably fastened to the slides by means of attachment lugs, so that when the slides move by means of hydraulic feed drives, the end working units can be moved independently to the right or left, depending on the shape, line or spacing of ridges. According to the invention, two alternative concepts provide feed control.

In the first embodiment, the guide device for monitoring the line or spacing of ridges during travel of the cultivator comprises pairs of spring-loaded guide wheels arranged oppositely on the sides of both end working units for inclined setting on the outer foot of the ridge. Guide wheel suspensions have a spring device to define the central position for copying irregularities. The guide rods interconnect the guide wheels in the respective pairs and are provided with sliders. The regulating device for automatic feed regulation of the end working units in the horizontal direction depending on the change in line or spacing of the ridges is formed by position sensors of sliders on the guide rods, which are connected to hydraulic distributors for controlling the hydraulic feed drives.

In the second embodiment, the guide device for monitoring the line or spacing of ridges during travel of the cultivator comprises at least one ultrasonic distance sensor, preferably pairs of ultrasonic distance sensors arranged oppositely on the sides of both end working units to follow the line of the outer foot of the ridge, and the regulating device for automatic feed regulation of the end working units in the horizontal direction depending on the change in line or spacing of ridges comprises an electro-hydraulic device for evaluating the signal of the ultrasonic distance sensor and for controlling the hydraulic feed drives.

Finally, it is preferred that the main frame is provided with a three-point linkage for supporting the cultivator on the tractor and may also be provided with liquid fertilizer tank.

The advantage of working unit and cultivator according to the invention consists especially in that the special loosening of the surface of the ridges before emergence or at the start of emergence of potatoes slows down, during precipitation or irrigation, the flow of water from the surface of the ridges into the furrows and increases the amount of rainfall or irrigation water retained inside the ridge.

Another advantage is that it allows to fertilize the emerging potato cover with liquid fertilizers applied to the sides of ridges to the roots of plants using special applicators in the form of application tools that also creates favourable conditions for absorption of water from precipitations flowing down the sides of the ridge to the places of storage of fertilizer, thus allowing to transport nutrients into the rooted zone of soil.

It is also advantageous when a mound of earth is formed below the point of entry of the applicator to the side of the ridge, which reduces flowing of rainwater down the side of the ridge and improves its infiltration into the ridge. This is achieved by chiselling the foot of the ridge using the loosening chisel. The advantage is achieving a higher retention effect of rainfall or irrigation water in the ridge because water flowing down the side of the ridge is directed under the ridge to the root zone of plants.

Another advantage is the improvement in retention of rainfall water in the non-rail furrow by creating dents by means of the rotary denting wheel. The non-rail furrow is shallower than the rail furrow; rainfall or irrigation water is retained in the dents formed, which creates more stable moisture conditions associated with better soil rooting in the adjacent side of the ridge and hence higher utilization of nutrients from the fertilizers applied to these areas when planting the tubers.

Last but not least, advantage of the invention is the automatic operation of the device with the adaptation to the irregularities of the line or spacing or rows and with the individual pressure adjustment of working tools for ridges, preventing their damage.

### Explanation of drawings

The invention will be explained in detail by drawings where the following is illustrated:
- Fig. 1: perspective view of working unit,
- Fig. 2: rear view of working unit,
- Fig. 3: perspective view of the cultivator with three working units, with one tilting arm in a horizontal working position and one tilting arm in a vertical transport position,
- Fig. 4: rear view of the cultivator according to Fig. 3,
- Fig. 5: rear view of the cultivator with three working units in a horizontal working position during cultivation,
- Fig. 6: perspective view of the cultivator with the guide wheels and the guide rod.

### Examples of the invention embodiments

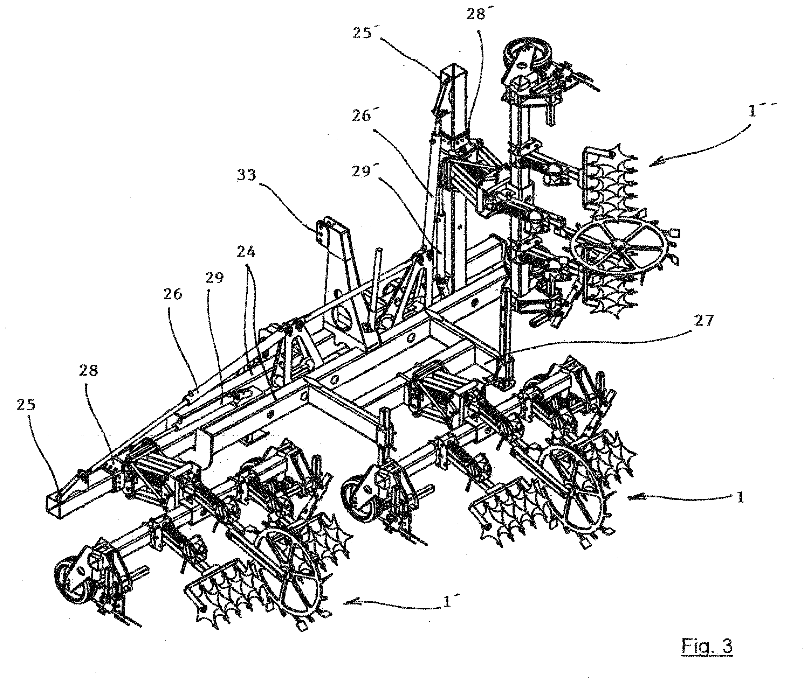

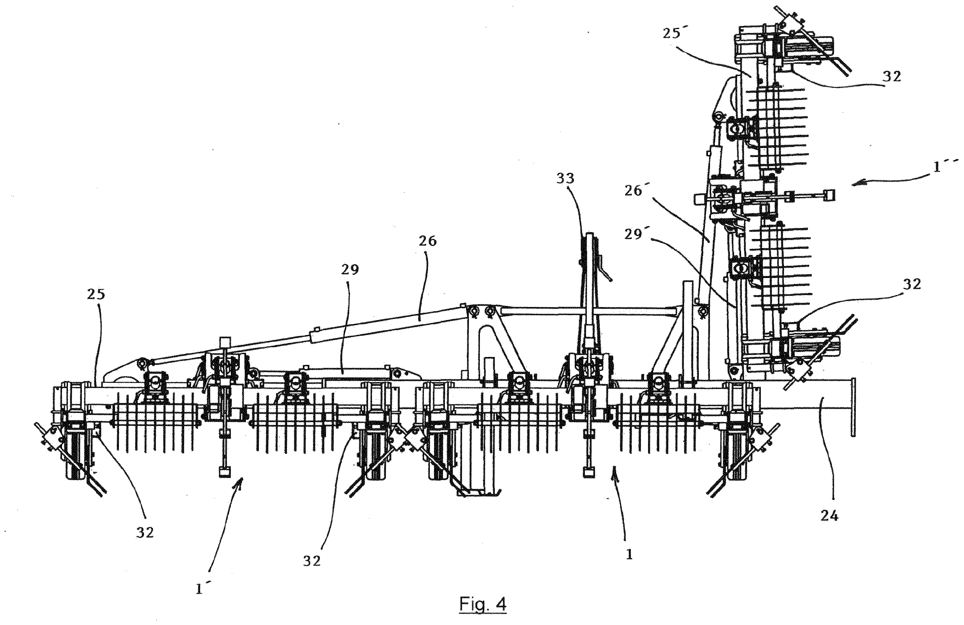

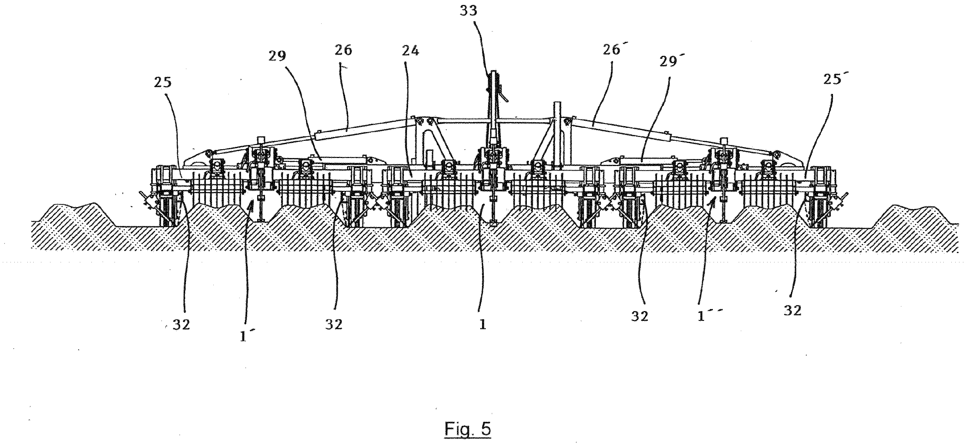

The cultivator for potato ridges shown in Figs. 3 to Fig. 6 is designed for simultaneous erosion control loosening of six potato ridges. In an alternative embodiment, it could cultivate at least two ridges if mounted as one single working unit; in an extended embodiment with five working units, it may cultivate up to ten ridges at once. Loosening the ridges is done both on the top and at the foot, while liquid fertilizer can be accurately applied to the foot of the ridge at once.

The cultivator shown in Fig. 3 to Fig. 6 is provided with a three-point linkage 33 for supporting on the tractor and carries three working units 1,1',1". The central working unit 1 is permanently in the horizontal position, the end working units 1', 1" are in the working position arranged horizontally and vertically in the transport position.

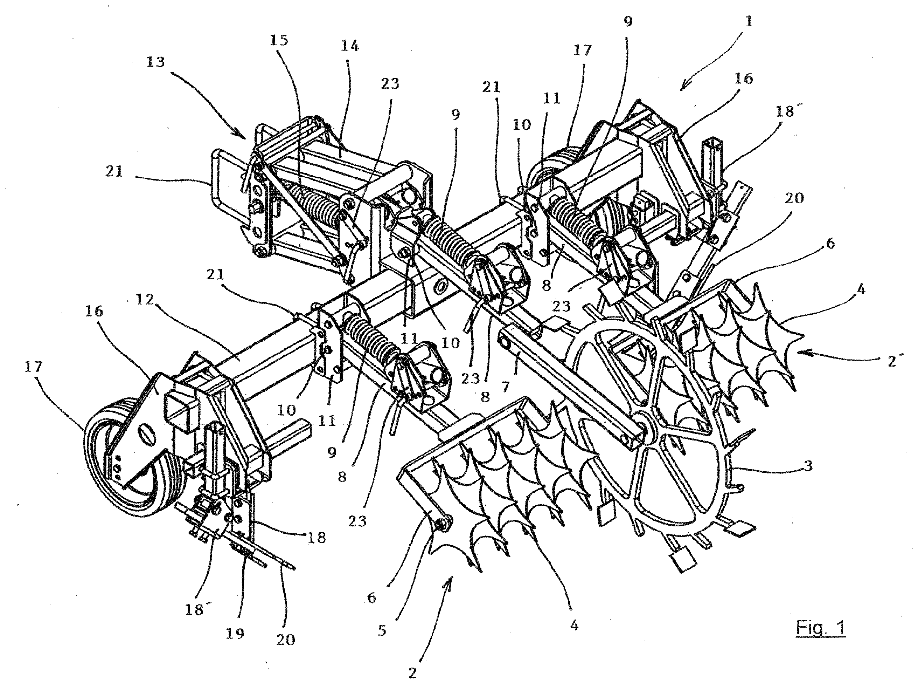

The central working unit 1 shown in Fig. 1 has the support 12 formed by a closed steel section, to which is on one side attached the central spring unit 13 consisting of a parallelogram 14 with a central spring 15 and device 23 for regulating the pressing force, which is formed by a control lever for adjusting the preload of the central spring 15 and the locking pin. From the other side, three spring-loaded pressing arms 8 are fixed to the support 12. Two end pressing arms 8 are pivotally mounted by means of suspensions 10 in the footings 11, which are attached by means of attachment lugs 21 to the support 12 so that it can be clamped in any position. The central pressing arm 8 is also pivotally mounted by means of a suspension 10 in the footing 11 but the footing 11 is attached to the sleeve 22 mounted on the support 12. The central spring unit 13 is mounted to the sleeve on the other side of the support 12. Both end pressing arms 8 carry the loosening rollers 2,2', each of which is formed by the fork 6 attached to the pressing arm 8, the shaft 5 pivotally mounted in the fork 6 and the assembly of loosening stars 4 attached to the shaft 5. The loosening stars 4 are five-tip working tools of steel plate, welded on the shaft 5 so that adjacent loosening stars 4 are mutually offset at an angle. In another embodiment, the loosening stars may have, for example, a three- or seven-tip shape. Turning the loosening roller 2,2' creates a uniform raster of traces on the surface of the ridge generated by spikes of the loosening stars 4. The central pressing arm 8 supports the rotary denting wheel 3, which is attached to the pressing arm 8 by means of trailing arm 7 and is arranged between the loosening rollers 2,2'. The rotary denting wheel 3 is provided with alternating tips and blades at its periphery to make penetrations and groove-shaped recesses at the bottom of the non-rail furrow between the ridges. It is provided with unillustrated gear and chain gear. The pressing arms 9 are provided with pressure springs 9 with the device 23 for regulating the pressing force, consisting of a control lever for adjusting the preload and a locking pin.

Both ends of the support 12 are provided with brackets 16, which are welded from steel plate.

In each bracket 16, in the portion protruding before the support 12, the travelling wheel 17 is pivotally mounted and, in the portion protruding behind the support 12, the clamping device 18 is attached for fixing the loosening chisel 19 and the clamping device 18' for fixing the liquid fertilizer applicator 20. The clamping devices 18, 18' are of standard design but they are arranged so that the loosening chisel 19 and the applicator 20 penetrate into the ridge from the side at an angle from 30 to 90°. The applicator 20 is composed of special application tool arranged in parallel to the loosening chisel 19 and behind it in the direction of motion of the cultivator. The applicator 20 is connected to the unillustrated distribution of liquid fertilizer, including the dosing device and the tank. In another unillustrated embodiment, the liquid fertilizer applicator can be integrated with the loosening chisel.

The end working units 1', 1" have the same construction as the central working unit 1 but also are provided with a guide device for monitoring the line or spacing of rows during travel of the cultivator.

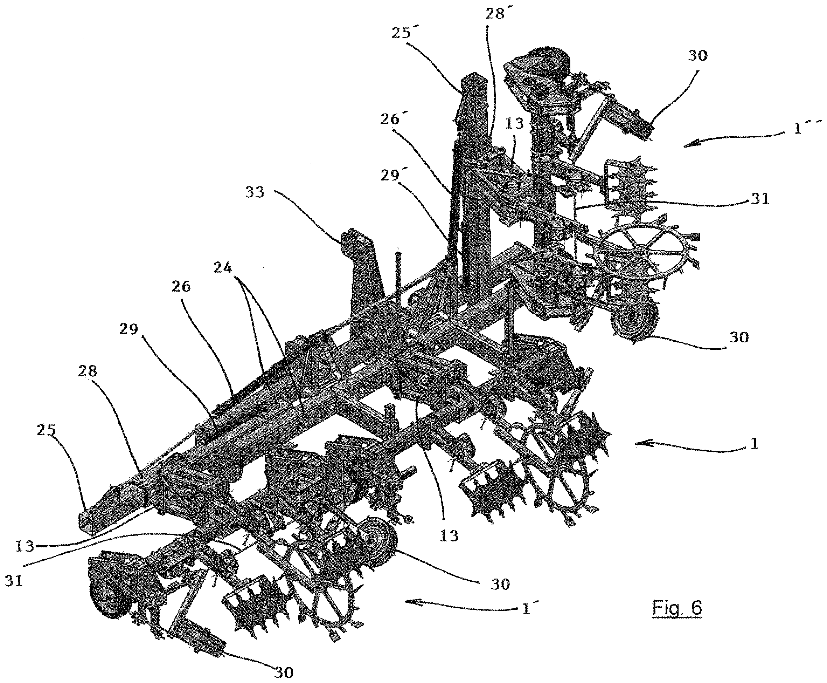

In the first embodiment shown in Fig. 6, the guide device is formed by pairs of spring-loaded guide wheels 30 arranged oppositely on the sides of both end working units 1'1". The guide wheels 30 are mounted on inclined arms fixed to the support 12 for inclined setting against the outer foot of the ridge and are also mounted in the spring segments allowing the elimination of irregularities and the monitoring of central position. The guide rods 31 interconnect the guide wheels 30 in the respective pairs and are provided with unillustrated sliders. The movement of these sliders is sensed by the unillustrated regulating device for automatic feed regulation of the end working units 1',1" in the horizontal direction depending on the change in line or spacing of ridges.

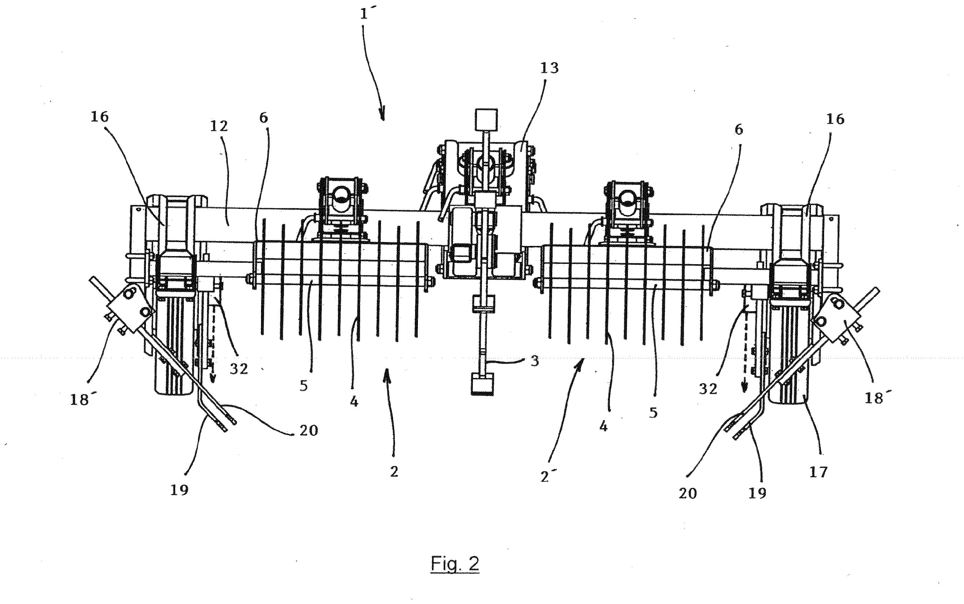

In the second embodiment shown in Fig. 2, Fig. 4 and Fig. 5, the guide device is formed by at least one ultrasonic distance sensor 32 for the distance to the foot of the ridge. Fig. 2 shows the embodiment with pairs of ultrasonic distance sensors 32 arranged oppositely on the inner sides of the brackets 16 of both end working units 1'1", for monitoring the lines of outer foot of the ridge. During travel of the cultivator, the ultrasonic sensors 32 continuously or discretely measures the distance to the foot of the ridge. If this distance changes, it means that the foot of the ridge "moves" to the left or right. The measured data are used by the unillustrated regulating device for automatic feed regulation of the end working units 1',1'' in the horizontal direction depending on the change in line or spacing of ridges.

The cultivator has the main frame 24 consisting of two parallel and mutually connected steel sections. In the central part of the main frame 24, the three-point suspension 33 is welded from one side and the auxiliary clamping frame 27 from the other side with a cross member, to which the central pressure unit 13 of the central working unit 1 is attached by means of attachment lugs 21. In another embodiment, shown in Fig. 6, the central working unit 1 can be attached directly to the main frame 24. Two tilting arms 25,25' are hinged to the main frame 24, formed by closed steel sections, mounted on pins, which can be adjusted from vertical transport position to horizontal working position and vice versa by means of hydraulic drives 26,26' for lifting and tilting. These are the hydraulic cylinders, one ends of which are hinged on supports extending from the main frame 24 and the other ends are hinged on the ends of tilting arms 25,25'. In the horizontal position, the tilting arms 25,25' in part of their length are mounted between the sections of the main frame 24 and in part of their length are extended. On the extended portions, the slides 28,28' are sliding-mounted, formed by steel sleeves with a cross-section corresponding to the section of the tilting arm 25,25'. The piston rods of hydraulic cylinders are hinged to the slides 28,28', whose ends are fixed to the tilting arms 25,25' in the portion mounted between the sections of the main frame 24. These hydraulic cylinders are formed by hydraulic feed drives 29,29'. On the slides 28,28', the central pressure units 13 of the end working units 1', 1" are mounted by means of attachment lugs 21. Lateral displacement of the slides 28,28' simultaneously moves the carried end working units 1',1", while this movement takes place automatically based on the signals of the guide device and the commands of the regulating device for the best copying of variations in lines or spacings of ridges.

The cultivator is also equipped with an unillustrated electric installation and hydraulic control system of hydraulic drives 26,26' for lifting and tilting, and hydraulic feed drives 29,29'. The hydraulic system is powered from the tractor and includes a three-way divider for setting a desired input flow rate and pressure, while the excess flow is discharged back via a return pipe. Electromagnetically operated hydraulic distributors CETOP-3 are used for motion control, which are mounted on the terminal blocks with safety valves. To ensure the pressure independence of hydraulic feed drives 29,29', the piston-type flow divider is used. The system further includes one-way throttle valves for controlling the speed of extension and retraction of piston rods.

The electric installation for hydraulics control comprises the main electronic board mounted on the machine where the relay outputs switch the control voltage for the coils of hydraulic valves and controllers, which control the moving machine parts in different modes. The electronics are powered from the 12V network of the tractor, the maximum current consumption is 6A. The supply voltage is supplied to the machine housing, from which the coils of hydraulics are also powered. If the guide device is formed by the ultrasonic distance sensors, they are also connected to the housing. The speed sensor can also be connected, which determines the movement of the machine and, depending on it, starts the subsequent regulation of working movements. The controller to be placed in the tractor is also powered by a cable, where the power supply and communication is combined with the main board. The control is equipped with a TFT display for checking the measured and set values; all is done by means of mechanical buttons below the display. The system can also be supplemented with a remote controller to operate outside the cab of the tractor.

In manual control mode, it is possible to freely control the movements of all parts of the machine, i.e. folding and unfolding, feeds of the end working units 1',1". Pictograms on the buttons of the controller show clearly enough the controlled parts. For automatic mode, where the end working units 1',1" are controlled by means of a guide and regulating device, this mode must be activated by pressing the AUTO button. Now it is possible to use the feed buttons to adjust the height above the foot of the ridge or mechanically adjust the height of the guide wheel 30. Therefore, the operator first checks, in slow driving, whether the rotary denting wheel 3 rolls on the central axis between the two ridges, and then adjusts the position and height above the foot of the ridge. The automatic regulation follows on condition that the rotary denting wheel 3 rolls and the machine is in the working position. When the row is completed and the operator lifts the machine into the transport position, the sensors evaluate it and the end working units 1',1" are centred in the central position, from which the automatic regulation starts again in the working position.

### Industrial Applicability

The working unit of the cultivator for potato ridges and the cultivator with this working unit according to the invention can be used in the field of agriculture, in particular in soil cultivation and fertilization when planting potatoes in ridges.

### Overview of the Positions Used in the Drawings

- 1: central working unit
- 1': end working unit
- 1": end working unit
- 2: loosening roller
- 2': loosening roller
- 3: rotary denting wheel
- 4: loosening star
- 5: shaft
- 6: fork
- 7: trailing arm
- 8: pressing arm
- 9: pressure spring
- 10: suspension
- 11: footing
- 12: support
- 13: central pressure unit
- 14: parallelogram
- 15: central spring
- 16: bracket
- 17: travelling wheel
- 18: clamping device for loosening chisel
- 18': clamping device for liquid fertilizer applicator
- 19: loosening chisel
- 20: liquid fertilizer applicator
- 21: attachment lug
- 22: sleeve
- 23: device for regulating the pressing force
- 24: main frame
- 25: tilting arm
- 25': tilting arm
- 26: hydraulic drive for lifting and tilting
- 26': hydraulic drive for lifting and tilting
- 27: auxiliary clamping frame
- 28: slide
- 28': slide
- 29: hydraulic feed drive
- 29': hydraulic feed drive
- 30: guide wheel
- 31: guide rod
- 32: ultrasonic distance sensor
- 33: three-point suspension

## Claims

1. Working unit (1) of a cultivator for potato ridges, comprising a support and an assembly of working tools for loosening and chiselling of ridges and for denting of non-rail furrow between adjacent ridges, wherein the assembly of working tools comprises at least two co-axial loosening rollers (2,2') for loosening the surface of adjacent ridges and one rotary denting wheel (3) arranged between the loosening rollers (2,2') on the same or parallel axis of rotation, wherein each loosening roller (2,2') is formed by an assembly of mutually angularly offset loosening stars (4) attached to the common shaft (5) mounted in a fork (6) in a pivoted manner, and the denting wheel (3) is mounted on a trailing arm (7), with each of the forks (6) and the trailing arm (7) carried on separate pressing arms (8), which are pivotally mounted via pressure springs (9) and suspensions (10) in the footings (11) anchored to a support (12), the central part of the support (12) is provided with a central pressure unit (13) formed by a parallelogram (14) with a central spring (15), and on the edges, the support (12) is provided with the brackets (16), in which travelling wheels (17) are mounted and which carry clamping devices (18), in which loosening chisels (19) are mounted in a replaceable and adjustable manner for loosening the outer side of the ridge.

2. Working unit according to claim 1 **characterized in that** the brackets (16) are provided with clamping devices (18') for mounting liquid fertilizer applicators (20) behind the loosening chisels (19).

3. Working unit according to claim 2 **characterized in that** the applicators (20) are mounted in a removable and adjustable manner in the clamping devices (18') in a parallel position with the loosening chisels (19).

4. Working unit according to any of claims 1 to 3 **characterized in that** the footings (11) carrying the pressing arms (8) with the loosening rollers (2,2') are provided with attachment lugs (21) for positionable attachment of pressing arms (8) to the support (12).

5. Working unit according to any of claims 1 to 4 **characterized in that** the footing (11) carrying the central pressing arm (8) with the rotary denting wheel (3) is attached to the sleeve (22) mounted on the support (12).

6. Working according to claim 5 **characterized in that** the central pressure unit (13) is also attached to the sleeve (22).

7. Working unit according to any of claims 1 to 6 **characterized in that** the central pressure unit (13) and the pressing arms (8) are provided with the devices (23) for regulating the pressing force.

8. Cultivator for potato ridges with the working unit according to any of claims 1 to 7 **characterized in that** it includes a main frame (24), carrying at least three working units (1, 1', 1"), of which at least one central working unit (1) is mounted in the central region of the main frame (24) and at least two end working units (1',1"), each mounted on the tilting arm (25,25') mounted on the main frame (24) with the possibility of rotary movement from the vertical to horizontal position and vice versa and connected with the hydraulic drive (26,26') for lifting and tilting, while mounting of the end working units (1,1') on the tilting arms (25,25') is slideable, and the cultivator is provided with a guide device for monitoring the line or spacing of ridges during travel of the cultivator and the associated regulating device for automatic feed regulation of the end working units (1',1") in the horizontal direction depending on the change in the line or spacing of ridges.

9. Cultivator according to claim 8 **characterized in that** the end working units (1',1") are arranged closer to the main frame (24) opposite to the central working unit (1).

10. Cultivator according to claim 9 **characterized in that** an auxiliary clamping frame (27) extends from the main frame (24), to which the central pressure unit (13) of the central working unit (1') is fastened by means of attachment lugs (21).

11. Cultivator according to any of claims 8 to 10 **characterized in that** the main frame (24) consists of two parallel and mutually connected sections, the tilting arms (25,25') are arranged oppositely therein, wherein their one ends are pivotally mounted between the sections and on their extended portions in the horizontal position on both sides out of the main frame (24), the slides (28,28') are sliding-mounted, connected with hydraulic feed drives (29,29').

12. Cultivator according to claim 11 **characterized in that** the central pressure units (13) of the end working units (1',1") are fastened to the slides (28,28') by means of attachment lugs (21).

13. Cultivator according to any of claims 8 to 12 **characterized in that** the guide device for monitoring the line or spacing of ridges during travel of the cultivator comprises pairs of spring-loaded guide wheels (30) arranged oppositely on the sides of both end working units (1'1") for inclined setting on the outer foot of the ridge and the guide rods (31) interconnecting the guide wheels (30) in the respective pairs and provided with sliders, and the regulating device for automatic feed regulation of the end working units (1',1") in the horizontal direction depending on the change in line or spacing of ridges is formed by position sensors of sliders on the guide rods (31), which are connected to hydraulic distributors for controlling the hydraulic feed drives (29,29').

14. Cultivator according to any of claims 8 to 12 **characterized in that** the guide device for monitoring the line or spacing of rows during travel of the cultivator comprises at least one ultrasonic distance sensor (32), preferably pairs of ultrasonic distance sensors (32) arranged oppositely on the sides of both end working units (1',1") to follow the line of the outer foot of the ridge, and the regulating device for automatic feed regulation of the end working units (1',1") in the horizontal direction depending on the change in line or spacing of ridges comprises an electro-hydraulic device for evaluating the signal of the ultrasonic distance sensor (32) and for controlling the hydraulic feed drives (29,29').

15. Cultivator according to any of claims 8 to 14 **characterized in that** the main frame (24) is provided with a three-point suspension (33) and a liquid fertilizer tank.

## Patentansprüche

1. Arbeitseinheit (1) eines Kultivators für Grate der Kartoffelfurchen, bestehend aus einem Träger und auf diesem befestigter Kombination von Arbeitswerkzeugen zur Lockerung und Meißelung der Grate sowie zum Pflanzlochen von nicht-Schienen Furchen zwischen benachbarten Graten, **dadurch gekennzeichnet, dass** die Kombination der Arbeitswerkzeuge mindestens zwei koaxiale Kultivierwalzen (2,2') für Lockerung benachbarter Grate sowie ein rotierendes Pflanzlochzahnrad (3), installiert zwischen den Lockerungswalzen (2.2') auf der gleichen oder parallelen Rotationsachse besitzt, wobei jeder der Lockerungswalzen (2.2') durch eine Kombination gegenseitig winkelversetzter Sterne (4) gebildet ist, die sich drehbar in einer Gabel (6) - montiert auf einer gemeinsamen Achse (5) befinden, wo das Pflanzlochzahnrad (3) auf einem Schlepparm (7) montiert ist, wobei jede der Gabel (6) und der Schlepparm (7) auf separaten Druckarmen (8) getragen sind, die drehbar mittels Druckfeder (9) und Aufhängungen (10) in Sockeln (11) am Träger (12) befestigt sind, und wo der Träger (12) im Mittelteil mit zentraler Druckeinheit (13) bestehend aus einem Parallelogramm (14) mit einer Zentralspringfeder (15) versehen ist, und wo darüber hinaus der Träger (12) an den Rändern mit Konsolen (16) ausgerüstet ist, in denen die Laufräder (17) gelagert sind, und die außerdem eine Spannvorrichtung (18) mit austauschbaren und verstellbaren Lockerungsmeißeln (19) zur Lockerung der Außenseite der Grate tragen.

2. Arbeitseinheit nach dem Anspruch 1, **dadurch gekennzeichnet, dass** die Konsolen (16) zwecks Befestigung der Applikatoren (20) des Flüssigdüngers hinter den Lockerungsmeißeln mit Spannvorrichtungen (18') ausgerüstet sind.

3. Arbeitseinheit nach dem Anspruch 2, **dadurch gekennzeichnet, dass** die Applikatoren (20) austauschbar und verstellbar in den Spannvorrichtungen (18') in paralleler Position mit den Lockerungsmeißeln (19) befestigt sind.

4. Arbeitseinheit nach einem der Ansprüche 1 bis 3, **dadurch gekennzeichnet, dass** die Sockel (11), welche die Druckarme (8) mit Lockerungswalzen (2.2') tragen, Spannbügel (21) zur Positionierung der Druckarme (8) relativ zum Träger (12) besitzen.

5. Arbeitseinheit nach einem der Ansprüche 1 bis 4, **dadurch gekennzeichnet, dass** der Sockel (11), der den zentralen Druckarm (8) mit drehbarem Pflanzlochzahnrad (3) trägt, mit der am Träger aufgesetzter Hülse (22) verbunden ist.

6. Arbeitseinheit nach dem Anspruch 5, **dadurch gekennzeichnet, dass** an der Hülse (22) gleichzeitig die zentrale Druckeinheit (13) befestigt ist.

7. Arbeitseinheit nach einem der Ansprüche 1 bis 6, **dadurch gekennzeichnet, dass** die zentrale Druckeinheit (13) sowie die Druckarme (8) mit Mitteln (23) zur Regulierung der Presskraft versehen sind.

8. Kultivator für Kartoffelgrate mit einer Arbeitseinheit nach einem der Ansprüche 1 bis 7, **dadurch gekennzeichnet, dass** der Hauptrahmen (24) zumindest drei Arbeitseinheiten trägt (1, 1', 1") und wenigstens eine mittlere im Mittelteil des Hauptrahmens (24) befestigte Arbeitseinheit (1) sowie mindestens zwei Randarbeitseinheiten (1', 1") besitzt, wobei jede von ihnen sich an einem klappbaren Arm (25, 25'), montiert auf dem Hauptrahmen (24) befindet und Möglichkeit einer Schwenkung aus der vertikalen in die horizontale Lage und umgekehrt bietet, wo jeder klappbarer Arm mit hydraulischen Antrieb zwecks Heben und Senken gekoppelt ist (26, 26'), wobei die Lagerung der Randarbeitseinheiten (1', 1") an den klappbaren Armen (25, 25') als verschiebbar konzipiert ist, und wo der Kultivator mit einem Führungsgerät zwecks Verfolgung der Linie oder des Abstandes der Graten während der Fahrt des Kultivators und mit ihm gekoppelten Steuergerät für automatische Vorschubregulierung der Randarbeitseinheiten (1', 1") in horizontaler Richtung in Abhängigkeit von der Linienänderung oder vom Abstand der Graten ausgerüstet ist.

9. Kultivator nach dem Anspruch 8, **dadurch gekennzeichnet, dass** die Randarbeitseinheiten (1', 1") gegenüber der mittleren Arbeitseinheit (1) näher zum Hauptrahmen (24) angeordnet sind.

10. Kultivator nach dem Anspruch 9, **dadurch gekennzeichnet, dass** aus dem Hauptrahmen (24) ein Hilfsspannrahmen (27) herausragt, an dem mittels Spannbügel (21) die zentrale Druckeinheit (13) der mittleren Arbeitseinheit (1') befestigt ist.

11. Kultivator nach einem der Ansprüche 8 bis 10, **dadurch gekennzeichnet, dass** der Hauptrahmen (24) aus zwei parallelen und miteinander verbundenen Profilen besteht, wo die klappbaren Arme (25, 25') gegenüberliegend angeordnet sind, wobei sie an einem ihrem Ende drehbar zwischen den Profilen montiert sind, und wobei sich an beiden Seiten aus dem Hauptrahmen (24) in horizontaler Lage herausliegenden Teilen verschiebbare, mit hydraulischen Antrieben des Vorschubs (29, 29') gekoppelte Gleitsteine (28, 28') befinden.

12. Kultivator nach dem Anspruch 11, **dadurch gekennzeichnet, dass** an den Gleitsteinen (28, 28') mit Spannbügeln (21) zentrale Druckeinheiten (13) der Randarbeitseinheiten (1', 1") befestigt sind.

13. Kultivator nach einem der Ansprüche 8 bis 12, **dadurch gekennzeichnet, dass** die Führungseinrichtung zur Verfolgung der Linie oder des Gratabstandes bei der Fahrt des Kultivators aus Paaren gefederter, an den Seiten beider Randarbeitseinheiten (1', 1") gegenüberliegender Führungsräder (30), zwecks schräges Aufliegens an den äußeren Fuß der Grate sowie aus Führungsstangen (31) besteht, welche die Führungsräder (30) der entsprechenden Paare verbinden und mit Schiebern versehen sind, und die Steuereinrichtung für automatische Regulierung des Vorschubs der Randarbeitseinheiten (1', 1") in horizontaler Richtung in Abhängigkeit von der Änderung der Linie oder des Gratabstandes besteht aus Positionssensoren der Schieber an den Führungsstangen (31), die mit Hydraulikverteilern zur Steuerung der Hydraulikantriebe (29, 29') des Vorschubs verbunden sind.

14. Kultivator nach einem der Ansprüche 8 bis 12, **dadurch gekennzeichnet, dass** die Führungseinrichtung zur Verfolgung der Linie oder des Gratabstandes bei der Fahrt des Kultivators wenigstens einen Ultraschall-Abstandssensor (32), mit Vorteil aber Paare von Ultraschall-Abstandssensoren (32) besitzt, die sich gegenüberliegend an den Seiten beider Randarbeitseinheiten (1', 1") zwecks Verfolgung der Linie des äußeren Gratfußes befinden, und die Steuereinrichtung zur automatischen Steuerung des Vorschubs der Randarbeitseinheiten (1', 1") in horizontaler Richtung, in Abhängigkeit von der Änderung der Linie oder des Gratabstandes besteht aus einem elektrohydraulischen Gerät für Auswertung der Ultraschall-Sensor (32) Daten betreffend Abstand, sowie für Steuerung der Hydraulikantriebe (29, 29') des Vorschubs.

15. Kultivator nach einem der Ansprüche 8 bis 14, **dadurch gekennzeichnet, dass** der Hauptrahmen (24) eine Dreipunktauhängung (33) und einen Behälter für Flüssigdünger besitzt.

## Revendications

1. Unité de travail (1) du cultivateur pour les crêtes de pommes de terre, comprenant une poutre et un ensemble d'outils de travail portés dessus, pour desserrer et ciseler les crêtes et pour marquer des trous dans le sillon sans rail entre des crêtes adjacentes, **car actérisé en ce,** que l'ensemble d'outils de travail se compose au moins de deux rouleaux de culture coaxiaux (2,2') pour desserrer la surface des crêtes adjacentes et une roue de marquage rotative (3), disposée entre les rouleaux de culture (2,2') sur le même axe de rotation ou parallèle, où chaque rouleau de culture (2,2') est formé par un système d'étoiles de culture (4) mutuellement angulairement décalées et fixées sur un arbre commun (5), monté rotatif dans une fourche (6), où la roue de marquage rotative (3) est attaché sur un bras de trainage (7), tandis que chacune des fourches (6) et aussi le bras de trainage (7) sont supportés sur des bras de pression séparés (8), montés de manière rotative dans les pieds (11), fixés à la poutre (12) via des ressorts de compression (9) et des charnières (10), la poutre (12) est pourvue dans sa partie centrale d'une unité centrale de pression (13) formée par un parallélogramme (14) avec un ressort central (15), et au niveau des bords, la poutre (12) est pourvue de supports (16) dans lesquels sont montées les roues de déplacement (17) qui portent des dispositifs de serrage (18) dans lesquels les ciseaux de culture (19) sont montés de manière remplaçable et réglable, pour ameublir l'extérieur de la crête.

2. Unité de travail selon la revendication 1, **caractérisée en ce, que** les supports (16) sont pourvus de dispositifs de serrage (18 ') pour fixer derrière les ciseaux de culture (19) les applicateurs d'engrais liquide (20).

3. Unité de travail selon la revendication 2, **caractérisé en ce, que** les applicateurs (20) montés de manière remplaçable et réglable sont fixées dans les dispositifs de serrage (18') en position parallèle avec les ciseaux de culture (19).

4. Unité de travail selon l'une quelconque des revendications 1 à 3, **caractérisée en ce, que** les pieds (11) portant les bras de pression (8) avec les rouleaux de culture (2,2') sont pourvus d'étriers de serrage (21) pour la fixation positionnable des bras de pression (8) à la poutre (12).

5. Unité de travail selon l'une quelconque des revendications 1 à 4, **caractérisée en ce, que** le pied (11) portant le bras de pression central (8) avec la roue rotative de marquage (3) est fixé au manchon (22) monté sur la poutre (12).

6. Unité de travail selon la revendication 5, **caractérisée en ce, qu'**en même temps l'unité centrale de pression (13) est fixée au manchon (22).

7. Unité de travail selon l'une quelconque des revendications 1 à 6, **caractérisée en ce, que** l'unité centrale de pression (13) et les bras de pression (8) sont pourvus de moyens (23) pour régler la force de pression.

8. Cultivateur pour les crêtes de pommes de terre avec l'unité de travail selon l'une quelconque des revendications 1 à 7, **caractérisée en ce, qu'**il comporte un châssis principal (24) portant au moins trois unités de travail (1,1', 1"), dont au moins une unité centrale de travail (1) montée dans la zone centrale du châssis principal (24), et au moins deux unités de travail d'extrémité (1', 1"), chacune fixée sur un bras basculant (25,25') monté dans le châssis principal (24) avec possibilité de mouvement rotatif de la position verticale à la position horizontale et vice versa, qui est relié à l'entraînement hydraulique (26,26') de levage et d'inclinaison, tandis que les unités de travail extrêmes (1, 1) sont montées sur les bras basculants (25,25') comme glissant et le cultivateur est équipé d'un dispositif de guidage pour surveiller la ligne ou l'espacement des crêtes pendant le déplacement du cultivateur, et d'un dispositif de contrôle relié, pour le contrôle automatique du déplacement des unités de travail extrêmes (1', 1") dans le sens horizontal en fonction du changement de ligne ou du pas des crêtes.

9. Cultivateur selon la revendication 8, **caractérisée en ce, que** les unités de travail d'extrémité (1', 1") sont disposées plus près du châssis principal (24) par rapport à l'unité de travail centrale (1).

10. Cultivateur selon la revendication 9, **caractérisée en ce, que** le châssis principal (24) possède un cadre saillant de serrage auxiliaire (27), auquel l'unité centrale de pression (13) de l'unité centrale de travail (1') est fixée au moyen d'étriers de serrage (21).

11. Cultivateur selon la revendication 8 à 10, **caractérisée en ce, que** le châssis principal (24) est formé par deux profils parallèles interconnectés, dans lequel les bras basculants (25, 25') sont disposés dans l'arrangement opposé, tandis qu'en même temps avec une extrémité ils sont fixés en rotation entre les profils et sur leurs parties situées en position horizontale sur deux côtés hors du châssis principal (24) se trouvent des glissières (28, 28') montées de manière coulissante et reliées aux entraînements hydrauliques (29, 29') de déplacement.

12. Cultivateur selon la revendication 11, **caractérisée en ce, que** les unités de pression centrales (13) des unités de travail d'extrémité (1', 1") sont fixées aux glissières (28, 28') au moyen d'étriers de serrage (21).

13. Cultivateur selon la revendication 8 à 12, **caractérisée en ce, que** le dispositif de guidage pour surveiller la ligne ou l'espacement des crêtes pendant la course du cultivateur est formé par des paires de roues de guidage à ressort (30) disposées en face l'une de l'autre sur les deux côtés des unités de travail d'extrémité (1'1') pour s'appuyer obliquement sur le pied extérieur de la crête, ainsi que par des tiges de guidage (31) reliant les roues (30) par paires appropriées, équipées de curseurs, et le dispositif de contrôle automatique du déplacement des unités de travail extrêmes (1', 1") dans le sens horizontal en fonction du changement de la ligne ou de l'espacement des crêtes est formé par les capteurs de position des curseurs sur les tiges de guidage (31), qui sont reliés aux tableaux hydrauliques pour la commande des entraînements hydrauliques (29,29') de déplacement.

14. Cultivateur selon la revendication 8 à 12, **caractérisée en ce, que** le dispositif de guidage pour surveiller la ligne ou l'espacement des crêtes pendant la course du cultivateur est formé par au moins un capteur de distance à ultrasons (32), de préférence par des paires de capteurs de distance à ultrasons (32), disposés en face l'un de l'autre sur les côtés des deux unités de travail extrêmes (1' 1"), pour surveiller la ligne du pied extérieur de la crête, où le dispositif de commande pour le contrôle automatique du déplacement des unités de travail extrêmes (1', 1") dans le sens horizontal en fonction du changement de ligne ou de l'espacement des crêtes se compose d'un dispositif électrohydraulique pour l'évaluation du signal du capteur de distance à ultrasons (32) et aussi pour le contrôle des entraînements hydrauliques (29, 29) de déplacement.

15. Cultivateur selon la revendication 8 à 14, **caractérisée en ce, que** le châssis principal (24) est pourvu d'un accrochage à trois points (33) et d'un réservoir d'engrais liquide.
